# EUROPÄISCHE PATENTSCHRIFT

(11) **EP 0 728 639 B1**
(45) Veröffentlichungstag und Bekanntmachung des Hinweises auf die Patenterteilung: **16.05.2001**
(21) Anmeldenummer: 95116251.0
(22) Anmeldetag: 16.10.1995
(51) Int. Cl.: B60R 25/04

(54) **Verfahren zum Betrieb einer Fahrzeugsicherungseinrichtung**
Method for operating a safety device for a vehicle
Méthode de fonctionnement d'une installation de sécurité pour véhicule

(30) Priorität: 21.02.1995 DE 19505871
(43) Veröffentlichungstag der Anmeldung: 28.08.1996
(73) Patentinhaber: ROBERT BOSCH GMBH, 70442 Stuttgart (DE)
(72) Erfinder: Pischke, Juergen, Dipl.-Phys., D-71287 Weissach (DE); Burger, Wilfried, Dr. Dipl.-Phys., D-71282 Hemmingen (DE)

(56) Entgegenhaltungen:
- DE-A- 3 613 605
- FR-A- 2 706 394

## Beschreibung

### Stand der Technik

Die Erfindung geht aus von einem Verfahren zum Betrieb einer Fahrzeugsicherungseinrichtung nach der Gattung des Hauptanspruchs. Eine solche ist beispielsweise in der älteren deutschen Patentanmeldung P 44 14 644.2 beschrieben. Hauptelemente dieser Anordnung sind ein zentrales Steuergerät sowie mehrere damit verbundene Funktionssteuergeräte zur Steuerung betriebsnotwendiger Fahrzeugfunktionen wie etwa des Zündzeitpunktes, der Kraftstoffeinspritzung oder des Antiblockiersystems. Alle Steuergeräte verfügen über einen Mikroprozessor, beziehungsweise eine vergleichbare logische Einheit. Eine Freigabe der Funktionssteuergeräte erfolgt nur nach erfolgreicher Durchführung einer Benutzerberechtigungsprüfung. Bei Inbetriebnahme des Fahrzeugs führt das zentrale Steuergerät hierzu einen Datenaustausch mit den Funktionssteuergeräten durch. Eine besondere Inbetriebnahmesituation liegt vor, wenn während des Fahrbetriebs durch ein das Betriebsende anzeigendes Signal oder ein Störsignal ein "Reset" ausgelöst wird, das heißt, die Funktionssteuergeräte in ihre Ausgangskonfiguration zurückversetzt werden und eine erneute Freigabe erwarten. Auslöser für einen derartigen Reset während des Fahrbetriebs können etwa eine kurzfristige Unterbrechung der Bordspannung oder eine EMV-Störung sein. Damit von einem Reset während des Fahrbetriebs kein Sicherheitsrisiko ausgeht, prüfen bekannte Sicherheitseinrichtungen im Falle eines Betriebsendesignals, ob die zum Zeitpunkt des Betriebsendesignals vorliegende Drehzahl eine Grenzdrehzahl überschreitet. Üblicherweise entspricht die Grenzdrehzahl dabei der Leerlauf- oder einer Schrittgeschwindigkeitsdrehzahl. Übersteigt die Istdrehzahl zum Zeitpunkt des Betriebsendesignals die Grenzdrehzahl, wird der Fahrzeugbetrieb ohne erneute Benutzerberechtigungsprüfung fortgesetzt. Dadurch ist sichergestellt, daß ein Fahrbetrieb nicht unerwünscht unterbrochen wird. Allerdings wird durch diese Maßnahme die Sicherheitswirkung gegen Fahrzeugdiebstahl eingeschränkt. Weil der Drehzahlgrenzwert, um eine Fortsetzung des Fahrbetriebs bei einem Reset während des Fahrbetriebs sicher zu gewährleisten, notwendigerweise niedrig gewählt werden muß, ergibt sich die Möglichkeit einer nicht rechtmäßigen Fahrzeuginbetriebnahme durch Anschleppen des Fahrzeugs. Durch Anschleppen läßt sich nämlich erzwungenermaßen eine über der Grenzdrehzahl liegende Motordrehzahl einstellen. Wird gleichzeitig, beispielsweise durch Kurzschließen, ein regulärer Einschaltvorgang simuliert, erkennt die Sicherungseinrichtung den irregulären Anschleppvorgang fälschlicherweise als Reset während des Fahrbetriebs und gibt den Fahrbetrieb frei.

Aus der FR-A 2 706 394 ist eine Diebstahlschutzeinrichtung bekannt. Zur Freigabe des Fahrzeugs muss der Benutzer einen Code über eine Tastatur eingeben. Stimmt der eingegebene Code mit dem Erwarteten überein, kann das Fahrzeug benutzt werden. Eine Inbetriebnahme des Fahrzeugs kann hilfsweise durch eine vorgegebene Betätigung des Gaspedals erfolgen, falls die Tastatur einen Deffekt aufweist.

Aus der DE-A 36 136 05 ist eine Diebstahlsicherung für Kraftfahrzeuge bekannt. Nur durch die Legitimation des Eigentümers, der den passenden Schlüssel eingibt, kann das Kraftfahrzeug funktionsfähig geschaltet werden. Bei Verlust des Schlüssels kann nur der Hersteller in Verbindung mit einem Verschlüsselungsgerät einen neuen gültigen Schlüssel erzeugen.

Aufgabe der Erfindung ist es deshalb, ein Verfahren zum Betrieb einer Fahrzeugsicherungseinrichtung derart weiterzubilden, daß ein Reset während des Fahrbetriebs eindeutig erkannt wird.

Diese Aufgabe wird gelöst durch ein Verfahren zum Betrieb einer Fahrzeugsicherungseinrichtung mit den Merkmalen des Hauptanspruchs. Eine erfindungsgemäße Einrichtung gestattet eine Wiederinbetriebnahme ohne Benutzerberechtigungsprüfung nur, wenn in einem bestimmten Speicher zum Zeitpunkt der Betriebsunterbrechung eine Information über einen regulären Fahrbetrieb abgelegt ist. Auf diese Weise kann ein Reset im Fahrbetrieb zuverlässig von anderen Unterbrechungssituatioen unterschieden werden. Insbesondere unterbindet eine erfindungsgemäße Fahrzeugsicherungseinrichtung den Fahrzeugdiebstahl durch Anschleppen. Sie ist leicht und kostengünstig in bekannte Sicherungseinrichtungen integrierbar.

Ein Ausführungsbeispiel der Erfindung wird nachfolgend unter Bezugnahme auf die Zeichnung näher erläutert.

### Zeichnung

Es zeigen Figur 1 ein Blockschaltbild der Sicherheitseinrichtung, Figuren 2 und 3 Flußdiagramme zur Veranschaulichung der Funktionsweise.

### Beschreibung

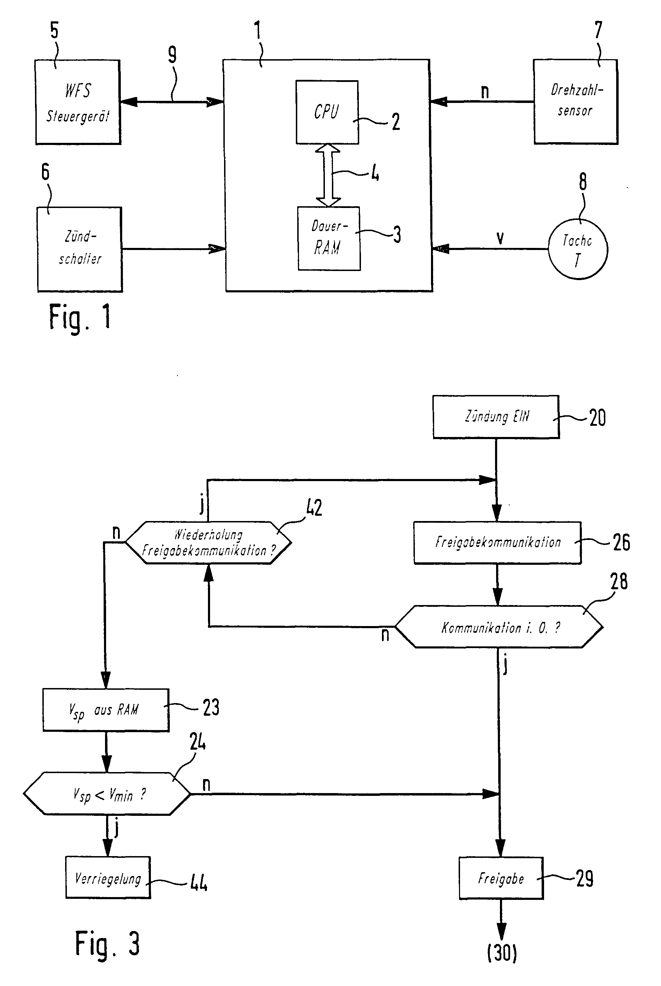

Figur 1 zeigt ein Funktionssteuergerät 1 zur Steuerung einer für den Betrieb eines Fahrzeugs wesentlichen Funktion, wie beispielsweise der Kraftstoffeinspritzung, des Getriebes, des Antiblockiersystems oder ähnliche. Es besteht im Kern aus einer logische digitale Signale verarbeitenden Einrichtung 2, 3, 4 mit einer Prozessoreinheit 2, und einem mit diesem über eine Datenverbindung 4 verbundenen, nicht flüchtigen Speicher 3, einem Dauer-RAM. Weitere Bestandteile des Funktionssteuergeräts 1 sind aus Gründen der Übersichtlichkeit nicht dargestellt. Mit dem Funktionssteuergerät 1 verbunden ist ein speziell zur Realisierung eines wirksamen Diebstahlschutzes dienendes Steuergerät 5, das im folgenden als WFS (Wegfahrsperren)-Steuergerät bezeichnet wird. Es prüft bei Inbetriebnahme des Fahrzeugs zunächst die Berechtigung des Benutzers. Anschließend führt das WFS-Steuergerät 5 über die Datenleitung 9 eine Entriegelungskommunikation mit dem Funktionssteuergerät 1 durch. Darin überprüft es die Zugehörigkeit des Funktionssteuergeräts 1 zum Fahrzeug und weiterhin, ob die Inbetriebnahme in vorgeschriebener Weise erfolgt. Ausgelöst wird die Inbetriebnahme zweckmäßig aufgrund eines in bekannter Weise von einem Zündschalter 6 abgegebenen Signales, welches zweckmäßig sowohl dem WFS-Steuergerät 5 als auch dem Funktionssteuergerät 1 zugeführt ist. Weitere für eine Inbetriebnahme von einem Benutzer vorzunehmende Maßnahmen, insbesondere solche zum Nachweis der Benutzerberechtigung gegenüber dem WFS-Steuergerät 5, sind der Übersichtlichkeit wegen nicht dargestellt.

Mit dem Funktionssteuergerät 1 weiterhin verbunden sind ein Drehzahlsensor 7, von dem es ein Drehzahlsignal n erhält, sowie ein Geschwindigkeitssensor 8, welcher ein Geschwindigkeitssignal v liefert. Drehzahlsignal n und Geschwindigkeitssignal v sind innerhalb des Funktionssteuergeräts 1 der Prozessoreinheit 2 zur Verfügung gestellt.

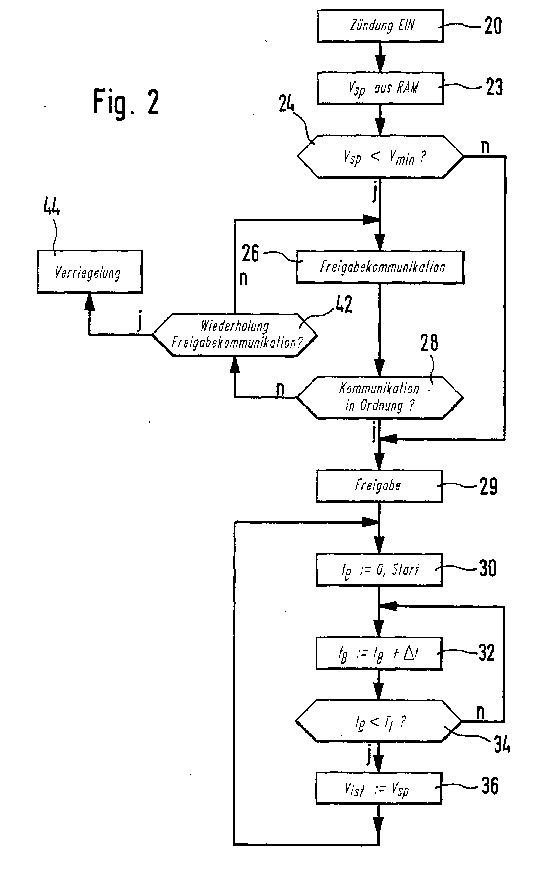

Die vorbeschriebene Anordnung nach Figur 1 wird wie in Figur 2 dargestellt betrieben. Als Ausgangssituation sei angenommen, daß das Funktionssteuergerät 1 nach Ausbleiben eines Betriebsfortsetzungsbefehles in seine Ausgangskonfiguration zurückversetzt sei. Vor diesem Hintergrund liege der Prozessoreinheit ein Inbetriebnahmebefehl vor. Er sei dadurch realisiert, daß die Prozessoreinheit 2 für den Zündschalter 6 eine Position Zündung "EIN" erkennt. Liegt so oder auf vergleichbare Weise ein Inbetriebnahmebefehl vor, Schritt 20, liest die Prozessoreinheit 2 aus dem nichtflüchtigen Speicher 3 eine darin gespeicherte Zustandsinformation aus, Schritt 23, welche charakteristisch für einen unmittelbar zuvor erfolgten Fahrbetrieb ist. Sie wird während des Fahrbetriebs fortlaufend mit einer Zykluszeit von typischerweise 0,5 bis 5 Sekunden in den Speicher 3 eingeschrieben. In einfacher Weise handelt es sich bei der Zustandsinformation um die Fahrzeuggeschwindigkeit v, für welche durch den in jedem Fahrzeug vorhandenen Geschwindigkeitssensor 8 ohnehin ein Signal vorliegt. Eine andere geeignete Information bildet beispielsweise der jeweils gewählte Gang. Die ausgelesene Zustandsinformation vₛₚ prüft die Prozessoreinheit 2 nun darauf, ob sie kleiner ist als ein vorgegebener Grenzwert vₘᵢₙ, Schritt 24. Dieser ist derart gewählt, daß er die betrachtete Zustandsinformation einteilt in einem Bereich, für den ein sofortiges Stillsetzen des Fahrzeugs nicht wünschenswert wäre und einen Bereich, für den ein sofortiges Stillsetzen möglich wäre. Wird als Fahrerzustandsinformation die Geschwindigkeit herangezogen, wird der Grenzwert für vₘᵢₙ vorzugsweise in einem Bereich zwischen 3 Km/h und 6 Km/h liegen.

Liefert die Prüfung in Schritt 24 ein positives Ergebnis, das heißt, ist die aus dem Speicher 3 ausgelesene Zustandsinformation vₛₚ kleiner als der vorgegebene Grenzwert vₘᵢₙ, erfolgt die Fahrzeuginbetriebnahme aus einer Stillstandslage heraus beziehungsweise nachdem eine sehr langsame Bewegung vorherging. Das Funktionssteuergerät leitet daher in üblicher Weise eine Freigabekommunikation ein, Schritt 26, und prüft im folgenden Schritt 28 deren richtigen Ablauf. Verläuft die Freigabekommunikation in vorgegebener Weise, schließt sich im Schritt 29 die Freigabe der entsprechenden Fahrzeugfunktion an.

Solange das Funktionssteuergerät 1 freigegeben ist, wird die im Speicher 3 abgelegte Fahrzustandsinformation vₛₚ regelmäßig erneuert. Hierfür wird nach erfolgter Freigabe im Schritt 30 zunächst ein Zähler zur Erfassung der Betriebszeit t_{B} gestartet. Sein Wert wird im Schritt 32 um den Betrag Δt inkrementiert. Anschließend erfolgt im Schritt 34 eine Prüfung, ob der aktuelle Betriebszeitwert t_{B} eine vorgegebene Zykluszeit T_{I} überschreitet. Ist dies nicht der Fall, werden die Schritte 32 bis 34 wiederholt. Ergibt die Prüfung im Schritt 34, daß die Betriebszeit t_{B} größer ist als die Zykluszeit T_{I}, wird im nachfolgenden Schritt 36 die aktuelle Fahrzustandsinformation vᵢₛₜ in den Speicher 3 eingeschrieben. Danach wird der Zähler zur Erfassung der Betriebszeit t_{B} erneut gestartet und die Schritte 30 fortfolgend wiederholt.

Ergibt die Prüfung im Schritt 24, daß der Wert der gespeicherten Fahrzustandsinformation vₛₚ größer ist als der Grenzwert vₘᵢₙ, ging der Inbetriebnahme ein Reset während des Fahrbetriebs voraus. In diesem Falle erfolgt nachfolgend keine Freigabekommunikation gemäß Schritt 26. Stattdessen gibt die Prozessoreinheit 2 das Funktionssteuergerät 1 direkt frei, Schritt 29 und führt den nachfolgenden Schritt 30 aus.

Ist im Falle einer Freigabekommunikation, Schritt 26, 28 diese nicht in Ordnung, prüft die Prozessoreinheit 2 im Schritt 42, ob eine Wiederholung der Freigabekommunikation erfolgen soll. Vielfach ist eine gewisse Anzahl von Fehlversuchen zulässig. Ist das Ergebnis der Prüfung positiv, wird die Freigabekommunikation 26, 28 wiederholt. Ist das Ergebnis der Prüfung im Schritt 42 negativ, erfolgt eine Verriegelung des Funktionssteuergeräts, Schritt 44. Es ist in diesem Fall von dem Versuch einer unrechtmäßigen Inbetriebnahme des Fahrzeugs auszugehen.

Unter Beibehaltung des zugrundeliegenden Konzeptes, die Wiederfreigabe des Fahrbetriebs im Falle einer Unterbrechung vom Vorhandensein einer Zustandsinformation vₛₚ abhängig zu machen, sind ohne Verlust für die Sicherheitswirkung verschiedene Abwandlungen des in Figur 2 wiedergegebenen Betriebsablaufs möglich. Eine Möglichkeit ist in Figur 3 angedeutet. Nach einem Inbetriebnahmebefehl, Schritt 20, leitet das Funktionssteuergerät bei dieser Ausführungsform unmittelbar eine Freigabekommunikation ein, Schritt 26, und überprüft im folgenden Schritt 28 deren Ablauf auf Richtigkeit. Ist der Ablauf der Freigabekommunikation in Ordnung, schließt sich im Schritt 29 die Freigabe der entsprechenden Fahrzeugfunktion an.

Ergibt die Prüfung im Schritt 28, daß die Freigabekommunikation nicht in Ordnung ist, prüft die Prozessoreinheit 2 im Schritt 42, ob eine Wiederholung möglich ist. Üblicherweise ist eine gewisse Anzahl von Fehlversuchen zulässig. Ist das Ergebnis dieser Prüfung positiv, wird die Freigabekommunikation 26 und die anschließende Prüfung 28 wiederholt.

Ist das Ergebnis der Prüfung im Schritt 42 negativ, folgt Schritt 23, wobei die Prozessoreinheit aus dem nichtflüchtigen Speicher 3 die darin gespeicherte Zustandsinformation vₛₚ ausliest. Die ausgelesene Zustandsinformation vₛₚ prüft sie anschließend darauf, ob sie kleiner ist als der vorgegebene Grenzwert vₘᵢₙ, Schritt 24. Ist das Ergebnis dieser Prüfung positiv, schließt sich unmittelbar die Freigabe der entsprechenden Fahrzeugfunktion an, Schritt 29. Ihr folgen wiederum die Schritte 30 bis 36 gemäß Figur 2.

Liefert die Prüfung im Schritt 24 ein positives Ergebnis, das heißt ist die aus dem Speicher 3 ausgelesene Zustandsinformation vₛₚ kleiner als der vorgegebene Grenzwert vₘᵢₙ, erfolgt eine Verriegelung des Funktionssteuergerätes, Schritt 44. Es ist in diesem Fall von dem Versuch einer unrechtmäßigen Inbetriebnahme des Fahrzeugs mit unkorrekter Freigabekommunikation auszugehen.

Das vorbeschriebene Verfahren zum Betrieb einer Fahrzeugsicherungseinrichtung unterbindet insbesondere ein unberechtigtes Anschieben des Fahrzeugs. Im Speicher 3 befindet sich nach ordnungsgemäßem Abstellen des Fahrzeuges stets eine Fahrzustandsinformation, deren Wert kleiner ist als der Grenzwert vₘᵢₙ. Für eine Inbetriebnahme aus einer Stillstandslage ist deshalb stets die Durchführung einer erfolgreichen Freigabekommunikation erforderlich.

## Patentansprüche

1. Verfahren zum Betrieb einer Fahrzeugsicherungseinrichtung mit einer programmgesteuerten Prozessoreneinheit (2), welche ein Funktionssteuergerät (1) nur nach erfolgreicher Durchführung einer Freigabekommunikation freigibt, dadurch gekennzeichnet, dass die Prozessoreneinheit (2) während des Fahrbetriebs eine Information (vₛₚ) über einen für den Fahrbetrieb charakteristischen Zustand aufzeichnet, und nach einer Unterbrechung eine Wiederfreigabe des Fahrbetriebs unabhängig von der Durchführung einer Freigabekommunikation erfolgt, wenn die aufgezeichnete Zustandsinformation (vₛₚ) einen Fahrbetrieb anzeigt

2. Verfahren nach Anspruch 1, dadurch gekennzeichnet, dass wenn die aufgezeichnete Zustandsinformation (vₛₚ) einen Fahrbetrieb anzeigt, eine Wiederfreigabe des Fahrbetriebs nach einer Unterbrechung ohne erneute Durchführung der Freigabekommunikation erfolgt.

3. Verfahren nach Anspruch 1, dadurch gekennzeichnet, dass nach einer Unterbrechung die Freigabekommunikation durchgeführt wird, die Wiederfreigabe des Fahrbetriebs aber unabhängig vom Ergebnis der Freigabekommunikation erfolgt, wenn die aufgezeichnete Information (vₛₚ) einen Fahrbetrieb anzeigt.

4. Verfahren nach Anspruch 1, dadurch gekennzeichnet, dass die aufgezeichnete Fahrzustandsinformation die Geschwindigkeit (v), die Drehzahl (n) oder der gewählte Gang ist.

5. Verfahren nach Anspruch 1, dadurch gekennzeichnet, dass die Fahrzustandsinformation (vₛₚ) zyklisch aktualisiert wird.

## Claims

1. Method for operation of a vehicle safety device having a programmable processor unit (2) which enables a function controller (1) only after an enable communication has been successfully carried out, characterized in that the processor unit (2) records information (vₛₚ) about a status which is characteristic of driving operation, during driving operation, and driving operation is enabled once again after an interruption irrespective of an enable communication being carried out, provided the recorded status information (vₛₚ) indicates driving operation.

2. Method according to Claim 1, characterized in that, when the recorded status information (vₛₚ) indicates driving operation, driving operation is enabled once again after an interruption, without the enable communication being carried out once again.

3. Method according to Claim 1, characterized in that, after an interruption, the enable communication is carried out, but driving operation is enabled once again irrespective of the result of the enable communication provided the recorded information (vₛₚ) indicates driving operation.

4. Method according to Claim 1, characterized in that the recorded driving status information is the speed (v), the rotation speed (n) or the selected gear.

5. Method according to Claim 1, characterized in that the driving status information (vₛₚ) is updated cyclically.

## Revendications

1. Procédé de mise en oeuvre d'une installation de sécurité de véhicule comportant un processeur (2) commandé par programme qui libère un appareil de commande de fonction (1) après une exécution réussie d'une communication de libération,
caractérisé en ce que
le processeur (2) enregistre, pendant le fonctionnement, une information (vsp) concernant un état caractéristique pour le fonctionnement, et
après une interruption, la nouvelle libération de la mise en route du véhicule se fait indépendamment de l'exécution d'une communication de libération si l'information d'état (vsp) enregistrée indique un état de fonctionnement.

2. Procédé selon la revendication 1,
caractérisé en ce que
si l'information d'état (vsp) enregistrée indique un fonctionnement, la libération du fonctionnement après une interruption se fait sans une nouvelle exécution de la communication de libération.

3. Procédé selon la revendication 1,
caractérisé en ce qu'
après une interruption, on exécute la communication de libération et la libération du fonctionnement se fait indépendamment du résultat de la communication de libération si l'information enregistrée (vsp) indique un fonctionnement.

4. Procédé selon la revendication 1,
caractérisé en ce que
l'information d'état, enregistrée, est la vitesse (v), -la vitesse de rotation (n) ou le rapport de vitesses choisi.

5. Procédé selon la revendication 1,
caractérisé en ce que
l'information d'état (vsp) est actualisée de manière cyclique.
